Europäisches Patentamt

European Patent Office

Office européen des brevets

(11) Veröffentlichungsnummer: **0 195 284**
**A2**

(12) **EUROPÄISCHE PATENTANMELDUNG**

(21) Anmeldenummer: 86102540.1

(22) Anmeldetag: 27.02.86

(51) Int. Cl.⁴: **G06F 11/00**

(30) Priorität: 20.03.85 US 713969

(43) Veröffentlichungstag der Anmeldung:
24.09.86 Patentblatt 86/39

(84) Benannte Vertragsstaaten:
AT BE CH DE FR GB IT LI NL SE

(71) Anmelder: **Siemens Aktiengesellschaft Berlin und
München
Wittelsbacherplatz 2
D-8000 München 2(DE)**

(72) Erfinder: **Ladendorf, Bruce
1-09 Fox Run Drive
Plainsboro, NJ 08536(US)**
Erfinder: **Glassmann, Martin S.
1167 Neshaminy Valley Drive
Bensalem, PA 19020(US)**
Erfinder: **Degeorge, Martin
3110 Woodhaven Drive
Cinnaminson, NJ 08077(US)**
Erfinder: **Atherton, James H.
Road 1, Box 210, Everitts Road
Ringoes, NJ 08551(US)**

(54) Vorrichtung, um die Anzahl der 1/0 Bits in einem n-Bit Binärwort zu zahlen.

㉗ Die 1/0 Bitzählerschaltung umfaßt ein I/O latch (14) mit n Eingängen und n Ausgängen jeweils zum Empfangen, Speichern und Darstellen von Signalen, die durch die Bits eines n Bit-Wortes beschrieben werden; und eine 1/0 Bitzählereinheit (16) mit n Eingängen, von denen jeder mit einem der Ausgänge des I/O Latchs verknüpft ist und mit m Ausgängen um Signale asynchron innerhalb eines Maschinenzyklusses an diesen m Ausgängen zu erzeugen, die die Anzahl der 1/0 Bits in einem n-Bit-Wort darstellen. Die m Ausgänge der 1/0 Bitzählereinheit (16) sind mit einem Akkumulator (22) verbunden, der die 1/0 Bitzählerergebnisse der aufeinanderfolgenden n-Bit Wörter für eine vorher festgelegte Zeitperiode, abhängig von der Größe des Akkumulators (22), akkumuliert.

EP 0 195 284 A2

FIG. 1    STAND DER TECHNIK

Vorrichtung, um die Anzahl der 1/0 Bits in einem n-Bit Binärwort zu zählen.

Die vorliegende Erfindung bezieht sich auf eine 1/0 Bitzählerschaltung; dies bezeichnet eine Schaltung, die die Anzahl von "1" oder "0" Bits in einer Dualzahl oder einem Wort zählt.

Es ist oft notwendig, die Anzahl von "1" oder "0" Bits in einer Dualzahlenfolge wie einem 16 Bitwort zu zählen. Zum Beispiel hat die Dualzahl 1001011010111001 16 Binärstellen, neun davon sind "1" Bits. Fehlerkennung und Korrektur (Paritätsprüfung) und Spracherkennung (Sprachmustervergleich) sind nur zwei der zahlreichen Fällen, in denen "Bitzählung" erforderlich ist.

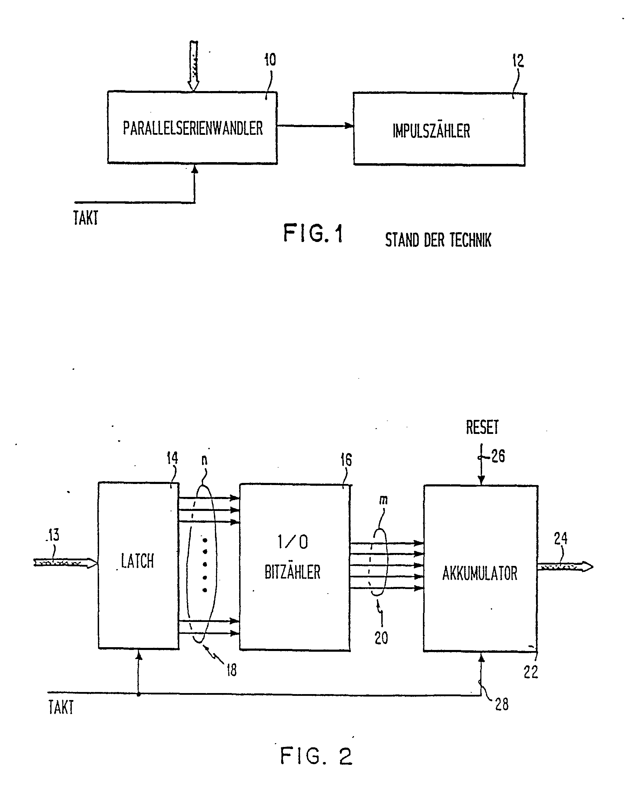

Mit Mikroprozessorsystemen ist es selbstverständlich möglich, 1/0 Bits in einem Binärwort mit einem geeigneten Softwarealgorithmus zu zählen. Solch ein Algorithmus benötigt aber einen übermäßigen Anteil an Rechnerzeit, da er vom Mikroprozessor das Ausführen einer relativ großen Anzahl von Befehlen erfordert, abhängig von der Anzahl der Binärstellen und der 1/0 Bits in einem Wort, die den Zählvorgang beeinflussen. Die Bitzählergeschwindigkeit kann gesteigert werden, durch den Einsatz einer separaten speziell angepaßten Hardware, die das Wort in eine bitserielle Form bringt und anschließend die Anzahl der Bits in dem seriellen Datenstrom zählt. So eine Hardware, ein Beispiel ist in Figur 1 dargestellt, beinhaltet einen Parallelserienwandler 10, der mit einem seriellen Ausgang einem Impulszähler 12 versorgt.

Sogar solch speziell angepaßte Hardware erfordert zumindesten n Taktzyklen um die 1/0 Bits (entweder "1" oder "0") in einem n-Bit Wort zu zählen. In gewissen Fällen ist es notwendig, die 1/0 Bits von n-Bit Wörter zu zählen, die mit einer Rate von einem Wort pro Taktzyklus aufeinanderfolgend angeliefert werden. Für solch eine Anforderung ist die serielle Zählerschaltung von Figur 1 zeitlich n mal zu langsam.

Es ist ein Gegenstand der vorliegenden Erfindung eine Bitzählerschaltung vorzustellen, die die 1/0 Bits eines n-Bit-Binärwortes mit einer bisher nicht erreichten Geschwindigkeit zählt.

Es ist insbesondere Gegenstand der vorliegenden Erfindung, eine Bitzählerschaltung vorzustellen, die im Stande ist, die "1" oder "0" Bits eines n-Bit-Wortes innerhalb der Zeitperiode von einem Maschinenzyklus eines Mikroprozessors zu zählen, die typischerweise ungefähr 250 Nanosekunden (16 Megahertztakt) beträgt.

Es ist weiterhin Gegenstand der vorliegenden Erfindung, eine Bitzählerschaltung der oben beschriebenen Art vorzustellen, die mit einem Mikroprozessorbus verbunden werden kann und die durch einen Mikroprozessor in der gleichen Weise wie ein peripherer Statikspeicher überwacht wird.

Diese und ebenfalls andere Gegenstände, die nach der nun folgenden Erörterung offenbar werden, werden erreicht in Übereinstimmung mit der vorliegenden Erfindung, durch ein I/O Latch mit n Eingängen und n Ausgängen jeweils zum Empfangen, Speichern und Darstellen von Signalen, die durch die Bits eines n-Bit Wortes beschrieben werden; und eine 1/0 Bitzählereinheit mit n Eingängen, von denen jeder mit einem der Ausgänge des I/O Latchs verknüpft ist und mit m Ausgängen um Signale asynchron innerhalb eines Maschinenzyklusses an diesen m Ausgängen zu erzeugen, die die Anzahl der 1/0 Bits in einem n Bit Wort, angelegt an seinen Eingängen, darstellen.

Diese Vorrichtung arbeitet so, daß sie entweder die "1" oder "0" Bits in einem Binärwort mit einer Geschwindigkeit von einem Wort pro Maschinenzyklus zählt. Die n Binärstellen eines Wortes werden durch das I/O

Latch an Eingängen der Bitzählereinheit für einen Zeitraum beibehalten, der genügt damit die 1/0 Bits asynchron durch den 1/0 Bitzähler gelangen und ein Ausgangssignal erzeugen.

Im Zusammenhang mit einem besonderen Merkmal der Erfindung sind die m Ausgänge der Bitzählerschaltung mit einem Akkumulator verbunden, der die 1/0 Bitzählergebnisse der aufeinanderfolgenden n-Bit Wörter für eine vorher festgelegte Zeitperiode, abhängig von der Größe des Akkumulators, akkumuliert. Mit dieser Anordnung ist es möglich, ein vollständiges Zählergebnis nach dem Anlegen einer Anzahl von n Bit Wörter an dem I/O Latch auszulesen.

Im Zusammenhang mit einem anderen, hervorzuhebenden Merkmal der Erfindung weist die Schaltung eine hintereinander geschaltete Blockbausteinarchitektur ("pipeline" architecture) auf, wodurch zu jedem Maschinenzyklus ein n Bit Wort an das I/O Latch angelegt werden kann, während das Bitzählergebnis des zuvor eingelesenen Wortes in dem Akkumulator addiert worden ist. Vorteilhafterweise können die Kontrollsignale von einem angeschlossenen Mikroprozessor benutzt werden um die Blockbausteine zu takten und zu steuern.

Für ein vollständiges Verständnis der vorliegenden Erfindung sollen nun nähere Erläuterungen für ein Ausführungsbeispiel der Erfindung und den beigefügten Zeichnungen gemacht werden.

Figur 1 ist ein Blockdiagramm einer 1/0 Bitzählerschaltung nach dem Stand der Technik.

Figur 2 ist ein Blockdiagramm einer 1/0 Bitzähleerschaltung, die das vollständige Konzept der vorliegenden Erfindung darstellt.

Figur 3 ist ein Blockdiagramm einer "1"-Bitzählerschaltung im Zusammenhang mit dem Ausführungsbeispiel der vorliegenden Erfindung.

Figur 4 ist ein Blockdiagramm eines "1"-Bitzählers, der im Schaltkreis von Figur 3 verwendet wird.

Figur 5 ist ein Prinzipschaltbild einer Volladdierzelle, die im Bitzähler von Figur 4 verwendet wird.

Figur 6 ist ein Prinzipschaltbild einer Halbaddierzelle, die im Bitzähler von Figur 4 verwendet wird.

Figur 7 ist ein Prinzipschaltbild einer Kontrollogik, die in der Schaltung von Figur 3 verwendet wird.

Figur 8 ist ein Blockdiagramm eines I/O ports, das in der Schaltung von Figur 3 verwendet wird.

Figur 9 ist ein Prinzipschaltbild einer Ein/Ausgabezelle, die im I/O port von Figur 8 verwendet wird.

Figur 10 ist ein Blockdiagramm des Eingaberegisters, das in der Schaltung von Figur 3 verwendet wird.

Figur 11 ist ein Blockdiagramm einer Eingaberegisterzelle, die im Eingaberegister von Figur 10 verwendet wird.

Figur 12 ist ein Zeitdiagramm, das die Abläufe der Schaltung von Figur 3 in einem 68000 Mikroprozessorsystem verdeutlicht.

Figur 13 ist ein Zeitdiagramm, das die Abläufe der Schaltung von Figur 3 in einem 8086 Mikroprozessorsystem verdeutlicht.

Figur 14a + Figur 14 b sind je ein Blockdiagramm und ein Prinzipschaltbild für einen 1/0 Bitzähler, der in der Schaltung von Figur 3 anstelle der Schaltung von Figur 4 verwendet werden kann.

Ein Ausführungsbeispiel der Erfindung soll nun in bezug auf die Zeichnungen der Figuren 2 bis 14 beschrieben werden. Identische Bestandteile, die in den Figuren dargestellt sind, werden mit den gleichen Bezugszeichen benannt.

Figur 2 stellt das Grundkonzept der 1/0 Bitzählerschaltung im Zusammenhang mit der vorliegenden Erfindung dar. Ohne Bezugnahme der Position der Bits in einem Wort zählt diese Schaltung die Anzahl der "1" oder "0" Bits, die in einem n-Bit parallel anliegenden Wort vorhanden sind. Sie addiert alle "1" oder "0" Bits in einem n-Bit-Binärwort und erzeugt eine Binärzahl, die jeweils gleich der gesamten Anzahl von "1" oder "0" ist.

In dem Zeitraum, indem aufeinanderfolgende n-Bit-Binärwörter an die Schaltung angelegt werden, werden die aufeinanderfolgende Anzahl von 1/0 Bits solange addiert, bis der Akkumulator zurückgesetzt wird.

Wie in Figur 2 gezeigt, werden die aufeinanderfolgenden n-Bit Binärwörter zu einem Eingangslatch 14 über n Eingangsleitungen 13 geführt. Dieses Latch schaltet die Bits eines jeden Wortes über die n Leitungen 18 zu einem 1/0 Bitzähler 16. Der Bitzähler erzeugt auf den m Ausgangsleitungen 20 eine Binärzahl; diese Zahl entspricht der Anzahl von "1" oder "0", die an den Leitungen 18 angelegt wurden. Die durch den Bitzähler erzeugten aufeinanderfolgenden Zahlenwerte werden in einem Akkumulator 22 addiert und der addierte Zahlenwert ist über seine Ausgangsleitungen 24 verfügbar.

Der Akkumulator 22 akkumuliert auf diese Weise die an ihn angelegten aufeinanderfolgenden Zahlen, solange bis er entweder überläuft oder er durch einen Impuls auf der Leitung 26 zu Null zurückgesetzt wird.

Wie aus Figur 2 ersichtlich ist, empfangen beide das Latch 14 und der Akkumulator 22, Taktimpulse auf der Leitung 28. In Reaktion auf jeden Taktimpuls, speichert das Latch 14 ein an den Eingangsleitungen 13 anliegendes n Bit Binärwort. Ebenfalls in Reaktion auf jeden Taktimpuls addiert der Akkumulator 22 zu seinem akkumulierten Zahlenwert, die Zahl die an seinen Eingangsleitungen auftritt. Diese hintereinander geschaltete Blockbausteinarchitektur - ("pipeline" architecture) erlaubt der 1/0 Bitzählerschaltung ein neues n Bit Wort während jedes Taktimpulszyklusses zu empfangen und zu verarbeiten.

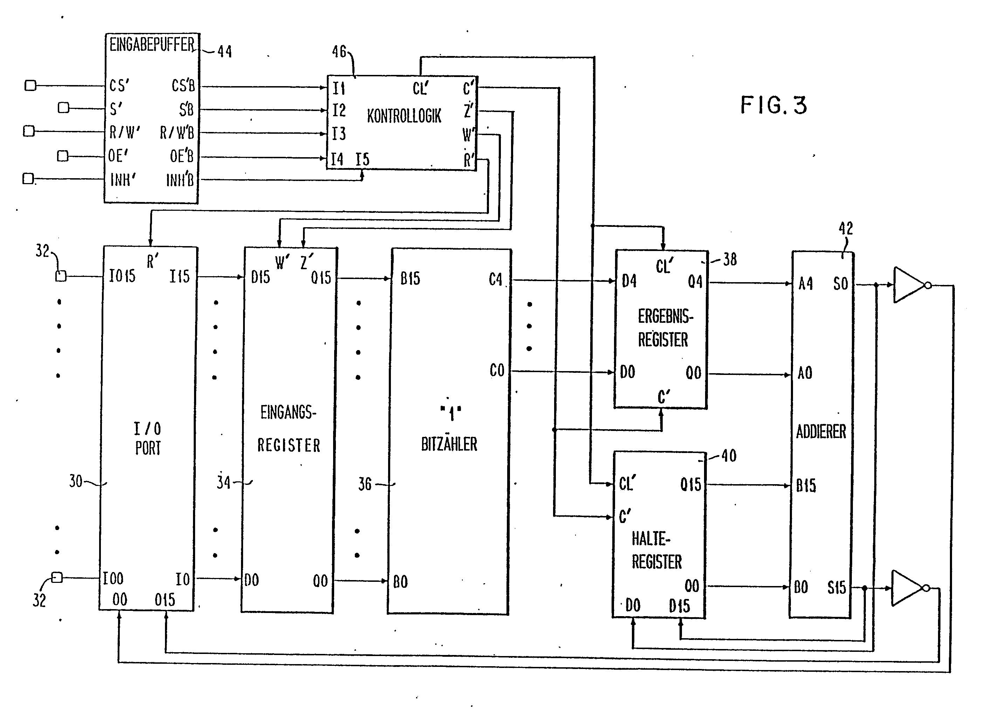

Figur 3 zeigt ein detailliertes Ausführungsbeispiel der Erfindung. Dieses Ausführungsbeispiel zählt die Anzahl der "1" in einem 16 Bit Eingangswort. Wie im Falle der Schaltung von Figur 2, bei der aufeinanderfolgende Wörter an die Schaltung gelegt werden, akkumuliert die Schaltung die Ergebnisse von jeder Bitzählung.

16-Bitwörter werden an dem I/O port 30 über die 16 Ein/ Ausgangsleitungen 32 angelegt. Der I/O port arbeitet wie ein Schalter; entweder werden die Signale an seinen I/O-Schnittstellen IO 0 bis IO 15 zu seinen Schnittstellen I 0 bis I 15 durchgeschaltet oder die Signale von seinen O Schnittstellen O 0 bis O 15 werden zu seinen I/O Schnittstellen IO 0 bis IO 15 durchgeschaltet. Die Schalterstellung von diesem Schalter wird durch ein Signal bestimmt, das an seiner "Leseleitung" am Eingang R' liegt.

Signale, die an seinen I/O Schnittstellen anliegen, werden zu einem Eingangsregister 34 durchgeschaltet. Dieses Register, das der gleichen Funktion wie das Eingangslatch 14 in Figur 2 dient, verwaltet die durch die Bits in einem Wort dargestellten Signale an seinen Ausgangsschnittstellen Q 0 bis Q15. Diese Signale werden an den 1 Bitzähler 36 angelegt, der die Anzahl der "1" Bits in dem angelegten Wort zählt und ein für diese Zählung spezifisches Ausgangsergebnis auf seinen fünf Ausgangsleitungen C 0 bis C 4 erzeugt.

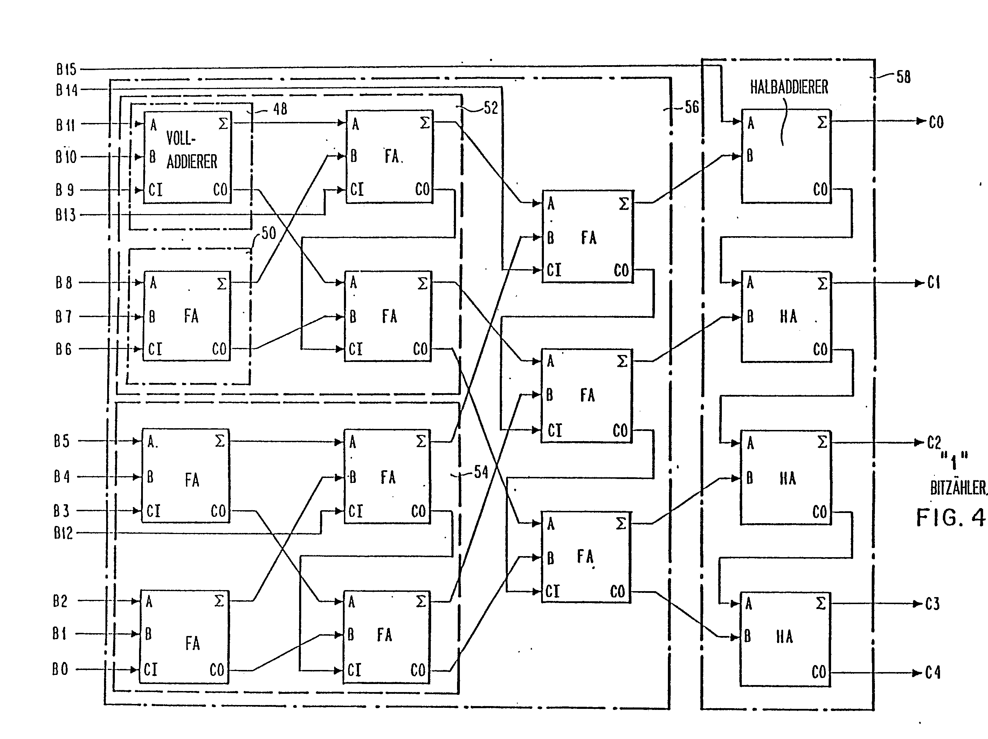

Eine Ausgestaltung des Bitzählers 36, der ein Ausgangsergebnis in ungefähr 50 Nanosekunden erzeugt, ist in Figur 4 dargestellt.

Das Ergebnis der Bitzählung erscheint und wird auf den Leitungen C 0 bis C4 solange gehalten, wie die Eingangssignale am Bitzähler 36 gleichbleiben. Unmittelbar nach Einleitung des nächsten Schaltzyklus durch das Taktsignal C' wird dieses Ergebnis in ein Ergebnisregister 38 getaktet. Die Inhalte des Ergebnisregisters 38 und die des Halteregisters 40 werden in einem Addierer 42 während dieses nächsten Zyklusses zusammenaddiert. Unmittelbar nach Einleitung des nachfolgenden Zyklusses (ebenfalls durch das Taktsignal C') wird das Ausgabeergebnis des Addierers 42 in das Halteregister 40 eingespeichert. Die Summe beider Inhalte des Halteregisters 40 und des Ergebnisregisters 38 können zu jeder Zeit durch den Addierer und den I/O port 30 ausgelesen werden. Nachdem diese Summe gelesen worden ist, wird das Halteregister und das Ergebnisregister durch das Signal CL' gelöscht.

Der in Figur 3 gezeigte Bitzähler ist so entworfen, daß er wie eine Peripherieeinheit in einem Mikroprozessor gestützten System arbeitet. Die Kontrollsignale CS', S', R/W', O E' und INH', die von den Mikroprozessor-Kontrolleitungen empfangen werden, werden durch ein Eingabepuffer 44 in eine Kontrollogikschaltung 46 weitergeleitet. Diese Kontrollogik übersetzt diese Mikroprozessor erzeugten Kontrollsignale in Signale, die für die Bitzählerschaltung gebraucht werden, so daß die Schaltung vom Mikroprozessor in ähnlicher Weise wie ein statischer Speicher behandelt werden kann. Wörter werden in die Bitzählerschaltung durch Ausführung standardisierter "Prozessorschreibzyklen" eingeschrieben. Die Bitzählerschaltung enthält eine fortlaufende Summe von allen logischen "1", die in allen n Wörtern enthalten waren und bis zu einer Maximalzahl von 4095 Wörter eingeschrieben worden sind. Die Ergebnissumme wird von der Bitzählerschaltung einen standardisierten "Prozessorlesezyklus" ausgelesen. Wie früher schon erwähnt beinhaltet das Lesen der Bitzählerschaltung Löschvorgänge, so daß der Akkumulator immer wenn er gelesen wird, rückgesetzt wird.

Zwei Bitzählerschaltungen können parallel benutzt werden, um die Eingangswortlänge zu verdoppeln und um damit ein 32 Bitsystem zu betreiben, oder die Hälfte einer Bitzählerschaltung kann in einem 8 Bitsystem benutzt werden.

Die Bitzählerschaltung macht sich eine hintereinander geschaltete Blockbausteinarchitektur ("pipeline" arcitecture) zunutze um den leistungsmäßigen Herausforderungen eines Hochgeschwindigkeitssystem zu begegnen. Solch eine Architektur schreibt vor, daß keine Signale auf den Leitungen der hintereinander geschalteten Blockbausteine anliegen, bevor der Bitzähler gelesen werden kann. Dies wird automatisch durch Weitertakten der Blockbausteine ausgeführt auch dann, wenn die Schaltung nicht ausgewählt worden ist. Entweder das Stromsignal S' oder das output enable OE' Kontrollsignal wird als ein Takt benutzt um die Blockbausteine in der Zeit weiterzutakten, in der die Schaltung nicht ausgewählt worden ist.

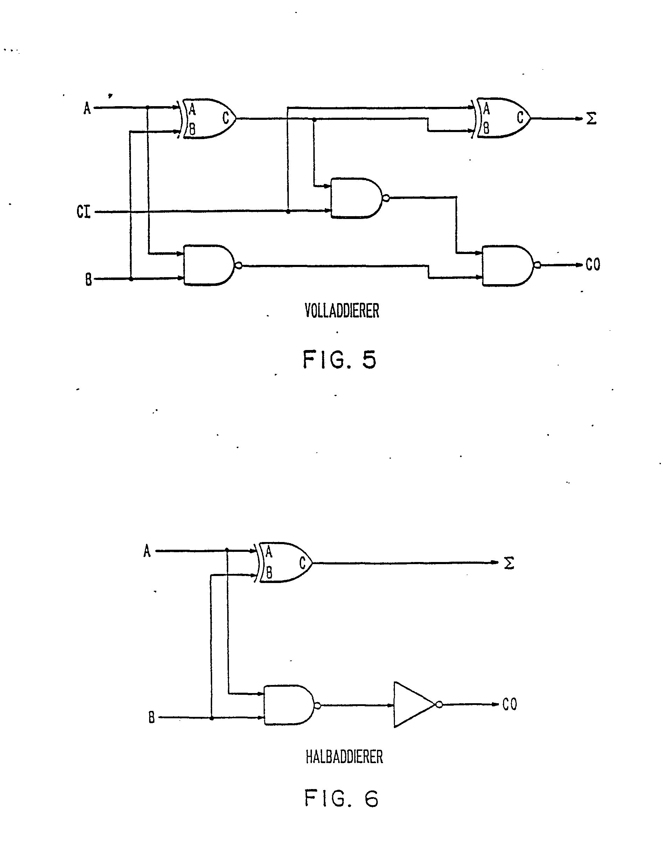

Figur 4 verdeutlicht einen 1 Bitzähler, der für die in der Figur 3 angeführten Ausgestaltung verwendet werden kann. Diese Schaltung umfaßt eine Anzahl von Volladdierer, dargestellt in der Zeichnung mit "FA" und eine Anzahl von Halbaddierer, dargestellt in der Zeichnung mit "HA", die miteinander verbunden werden. Wie aus Figur 4 ersichtlich ist, werden die Eingänge B 0 bis B15 in die Ausgänge C 0 bis C4 über Zwischenschaltungen von Voll-und Halbaddierer überführt. Mit den Volladdier-und Halbaddierschaltungen, gezeigt jeweils in Figur 5 und 6 werden die Signale asynchron in weniger als ungefähr 50 Nanosekunden weiterverarbeitet.

Die Bitzählerschaltung von Figur 4 ist aus Blockbausteinen aufgebaut, die durch gestrichelte Linien gekennzeichnet sind. Der kleinste Blockbaustein dargestellt in Figur 4 wie Block 48 und 50 ist im Stande, die "1" Bits in einem 3-Bit Wort (n = 3) zu zählen. Je so ein Blockbaustein besitzt zwei Ausgangsleitungen (m = 2) um die Anzahl der "1" Bits anzuzeigen, die an den drei Eingängen anliegen - (null, eins, zwei oder drei "1" Bits).

Der nächstgrößere Blockbaustein, dargestellt in Figur 4 wie die Blöcke 52 und 54 dient dazu die "1" Bits in einen 7 Biteingangswort (n = 7) zu zählen. Dieser Block hat drei Ausgänge (m = 3), die ausreichen um jede mögliche Anzahl von "1" Bits (von 0 bis 7) darzustellen. Wie in Figur 4 dargestellt, wird ein Block 52 dadurch gebildet, daß die Ausgänge der Blöcke 48 und 50 mit den Eingängen der zwei Volladdierer verbunden werden und daß die carry Eingänge dieser beiden Addierer je mit einer Bitposition des Eingabewortes (B13) und mit dem carry Ausgang des anderen Addierers verbunden sind.

Der nächstgrößere Blockbaustein 56 dient dazu, die "1" Bits in einem 15 Bitwort (n = 15) zu zählen. Dieser Blockbaustein 56 hat vier Ausgänge (n = 4) um die Anzahl von "1" Bits in einem Eingabewort (0 bis 15) darzustellen.

Der Block 56 umfaßt als eine letzte Stufe drei Volladdierer, die als Eingänge alle Ausgänge der zwei nächstgrößenmäßig kleineren Blockbausteine 52 und 54 aufnimmt. Die carry Eingänge dieser Volladdierer sind so verschaltet, daß sie alle Ausgänge der Blöcke 52 und 54 und den Inhalt einer zusätzlichen Bitposition (B14) aufnehmen.

Es ist möglich, die beschriebene Blockbausteinstruktur, im Umfang unbeschränkt zu vergrößern, durch die Kombination zweier kleinerer Blöcke und einer Gruppe von Volladdierer um dadurch einen größeren Block zu bilden. Um den nächstgrößeren Block zu bilden können in der Weise zwei identische Blöcke vom Block 56 mit vier Volladdierer kombiniert werden und so weiter. Immer wenn ein größerer Block aus zwei kleineren Blöcken gebildet wird, ist die Anzahl der zu benützenden Eingänge gegeben durch:

$$n = 2p + 1$$

wobei n die Gesamtzahl der zu benützenden Eingänge und p die Anzahl der zu benützenden Eingänge eines jeden kleineren Blockbausteins ist. Jede Eingangsgröße n kann durch eine geeignete Konfiguration von Blöcken der Länge $Log_2$ n und durch Beschalten einiger der Eingänge mit Null Volt angepaßt werden. Es ist ebenfalls möglich die Anzahl n der Eingänge durch eine Einheit zu vergrößern, in dem eine Gruppe von Halbaddierer zu einem Einzelblockbaustein hinzugefügt wird, wie in Figur 4 dargestellt. In diesem Falle wird der letzten Gruppe von Addierern 58 alle Ausgänge des früheren Blockbausteins 56 und den Inhalt von einer Bitposition (B15) zugeführt. Die Gruppe von Halbaddierern 58 hat eine Gesamtzahl von 5 Ausgängen (n = 5) um die Anzahl der Einsen, die in einem 16 Bit Eingangswort vorhanden sind, anzuzeigen.

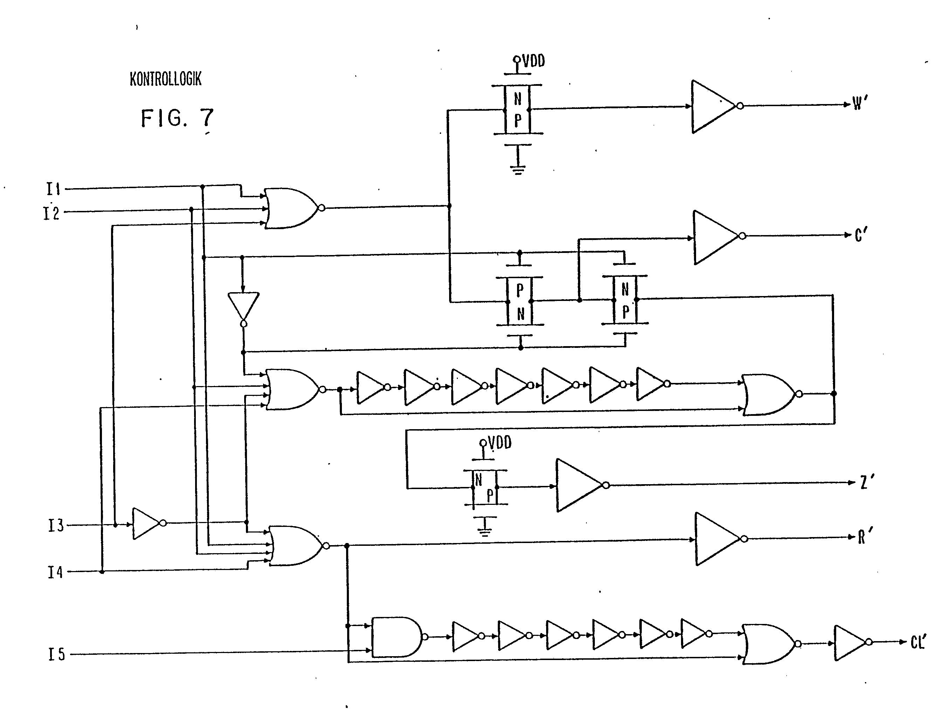

Die Kontrollogik, die in der Bitzählerschaltung von Figur 3 benutzt wird, ist in Figur 7 dargestellt. Diese Logik übersetzt die Mikroprozessorkontrollsignale in Signale R', D', Z', C' und CL' um die Bitzählerschaltung zu steuern. Insbesondere dienen diese Signale den folgenden Funktionen:

R': schaltet den I/O Port 30 so, daß der Inhalt des Akkumulators ausgelesen werden kann.

W': speichert die Inhalte ins Eingangsregister.

Z': Rücksetzen des Eingangsregisters.

C': Parallel getaktete Eingabe von Wörtern in das Ergebnisregister und Halteregister.

CL': Löschen des Ergebnisregisters und des Halteregisters.

Die Z' und C' Impulse dienen also dazu, die hintereinander geschalteten Bausteine der Bitzählerschaltung weiterzutakten. Diese Impulse treten entweder bei der Anstiegsflanke von OE' (output enable) oder bei S' (Strobe) Impulsen des Mikroprozessors auf, wenn die Bitzählerschaltung ausgewählt ist.

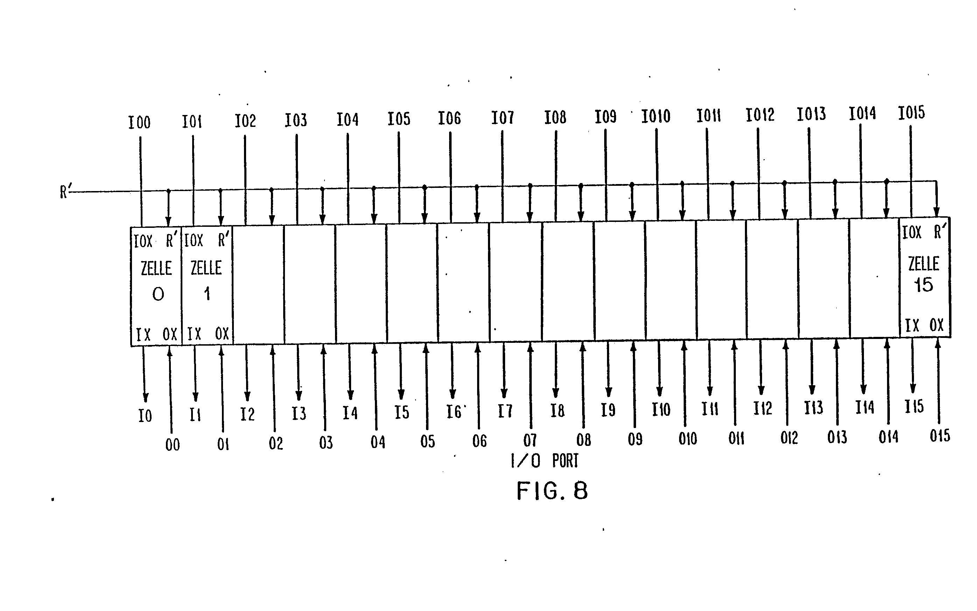

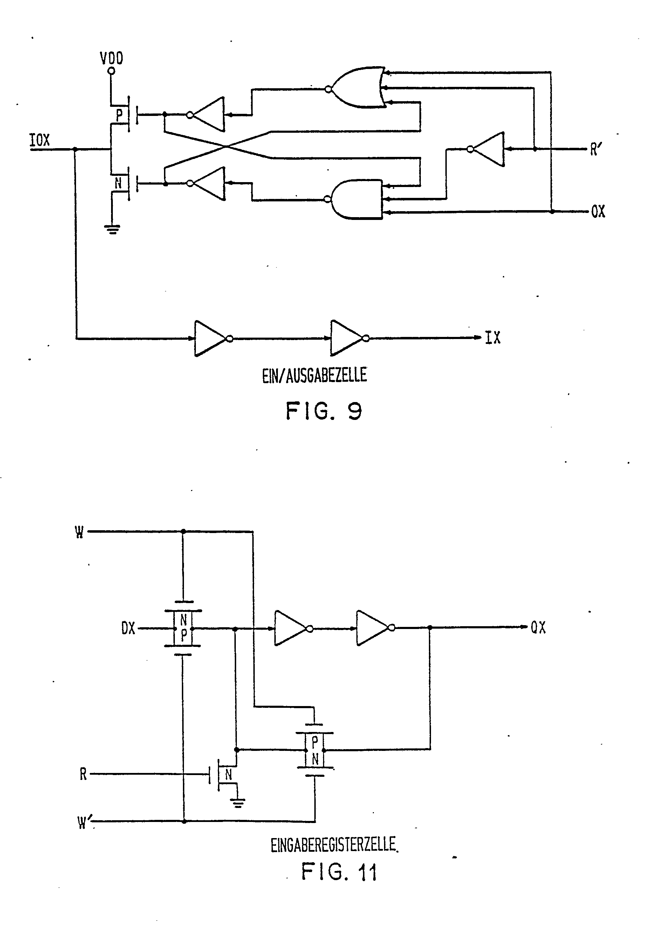

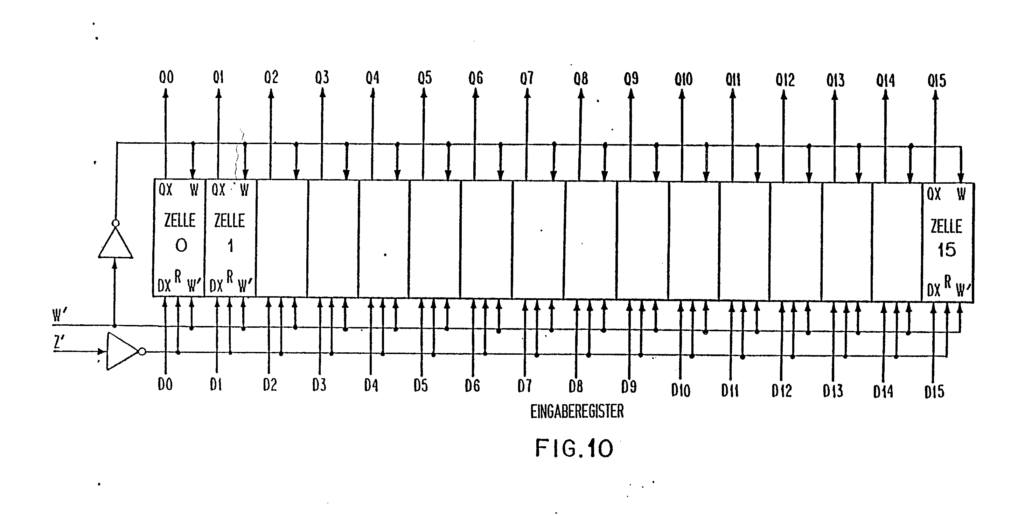

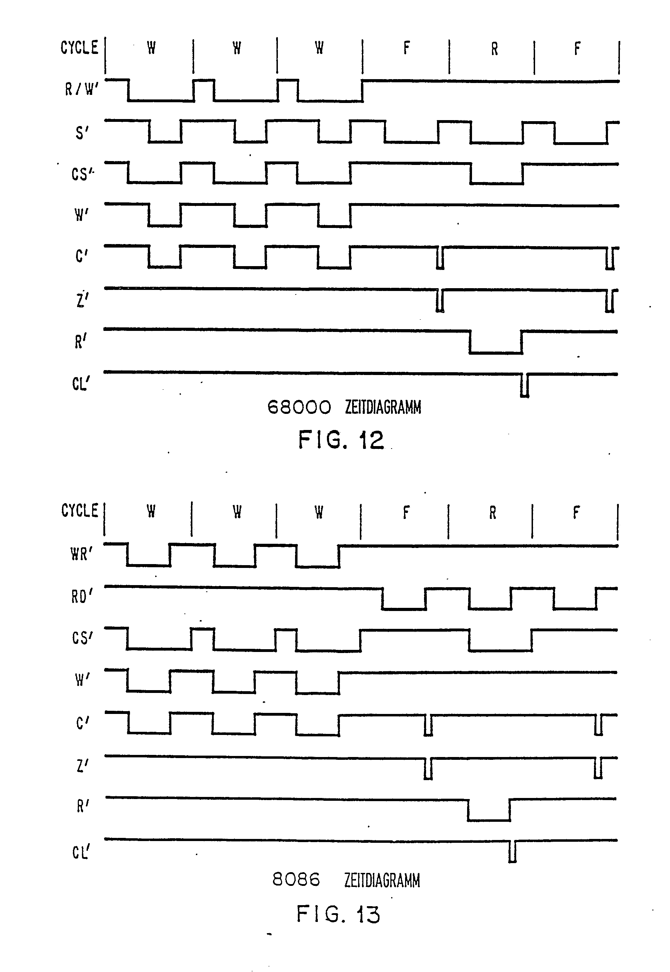

Einzelheiten des I/O ports sind in Figur 8 und Figur 9 dargestellt. Einzelheiten des Eingangsregisters sind in Figur 10 und 11 dargestellt.

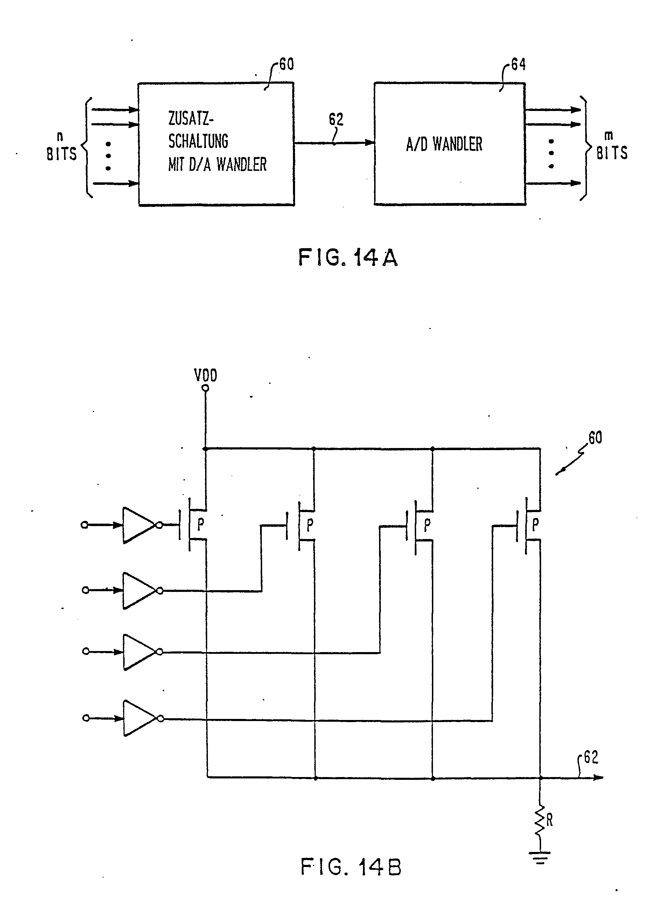

Der Zeitverlauf von Kontrollsignalen für die Bitzählerschaltung ist in Figur 12 für einen Motorola 68000 Mikroprozessor und in Figur 13 für einen Intel 8086 Mikroprozessor dargestellt. Beide Zeitverlaufsdiagramme zeigen drei Schreibzyklen gefolgt von einem "Fetch" Zyklus, einem Lesezyklus, und wiederum einem "Fetch" Zyklus.

Es wird verständlich sein, daß die Vorrichtung zum Zählen der Anzahl der 1/0 Bits in einem n-Bit Dualwort, in Zusammenhang mit der vorliegenden Erfindung eine oder eine beliebige Anzahl von Schaltungen zum Zählen von 1/0 Bits umfassen kann. Es ist für die vorliegende Erfindung notwendig, daß dieses Zählen asynchron und innerhalb eines Taktzyklusses eines Mikroprozessors erfolgt. Obwohl ein Mikroprozessor typischerweise an eine hohe Taktgeschwindigkeit (zum Beispiel 16 Megahertz) angeschlossen ist, arbeiten seine Peripherieeinheiten mit einer geringeren Taktgeschwindigkeit (zum Beispiel 4 Megahertz) wodurch sich ein längerer Taktzyklus (zum Beispiel 250 Nanosekunden) ergibt.

Wie eingangs erwähnt benötigt die Schaltung von Figur 4 zum "1" Bit Zählen ungefähr 50 Nanosekunden. Eine andere Schaltung zu der Schaltung von Figur 4 ist eine PROM oder PLA Schaltung, welche wie eine Nachschlagetabelle programmiert ist. Jedoch ist es für eine 16 Biteingabe (Adresse) und eine 5 Bitausgabe (Daten) notwendig eine Einheit mit entsprechend 320 KBits Speicherplatz vorzusehen. Dennoch hat diese Methode den Vorteil, daß jede beliebige Funktion in der Tabelle untergebracht werden kann, so daß die n Bit Binärzahl an den Eingängen in eine beliebige n Bit Binärzahl an seinen Ausgängen überführt werden kann.

Eine andere kostengünstigere Ausführung für einen 1/0 Bitzähler ist in Figur 14a und 14b dargestellt. Figur 14a zeigt die Grundstruktur die aus einer Zusatzschaltung 60 mit einem DigitalAnalogwandler besteht, der eine Ausgangsspannung auf Leitung 62 erzeugt, die proportional zu der Anzahl von 1/0 Bits in einem n-Bit Binärwort ist, daß an seinen Eingängen anliegt. Die Spannung auf Leitung 62 wird zu einem AD Wandler geliefert, der ein n-Bit Binärwort an seinen Ausgängen erzeugt, welches die Spannung auf der Leitung 62 darstellt.

Ein Beispiel für so eine Zusatzschaltung 60 ist in Figur 14b dargestellt. In dieser Schaltung stellt jede der Transistoren eine schaltbare Stromquelle dar, so daß der Strom durch den Widerstand R gleich sein wird a . i, wobei a die Anzahl der durchgeschalteten Transistoren ist und i die Stromstärke durch jeden Transistor kennzeichnet.

Ausführungen, die nicht von der Idee und dem Umfang der Erfindung dieser 1/0 Bitzählerschaltung abweichen, werden als durch die Erfindung geschüzt betrachtet.

**Ansprüche**

1. Vorrichtung, um die Anzahl der 1/0 Bits in einem n-Bit-Binärwort zu zählen, insbesondere für die Verwendung mit einem Mikroprozessorsystem, mit folgenden Merkmalen:

a) ein Eingangslatch (14) mit n Eingängen und n Ausgängen, welches an seinen Eingängen die durch die 1/0 Bits in einem Wort gekennzeichneten Signale empfängt, intern speichert und an seinen Ausgängen weiterleitet,

b) einen 1/0 Bitzähler (16) mit n Eingängen und m Ausgängen, wobei je ein Eingang mit je einem Ausgang des Eingangslatchs (14) verbunden ist und der asynchrone Signale innerhalb eines Mikroprozessorzyklusses an seinen Ausgängen erzeugt, die die Anzahl der 1/0 Bits in einem n-Bit-Wort, das an seinen Eingängen anliegt, darstellen,

c) einen Akkumulator (22) mit m Eingängen und q Ausgängen, wobei je ein Eingang mit je einem Ausgang des 1/0 Bitzählers (16) verbunden ist und der an seinen Ausgängen die Summe der 1/0 Bits darstellt.

2. Vorrichtung nach Anspruch 1, **dadurch gekennzeichnet,** daß das Eingangslatch (14) und der Akkumulator (22) mit Takteingängen versehen ist und daß jeder auf einen Taktimpuls auf seinen Takteingängen seinen Zustand ändert, indem das Eingangslatch (14) das nächste n-Bitwort annimmt und speichert und der Akkumulator (22) zu seiner Summe die gezählte Anzahl der 1/0 Bits, die an den n Ausgängen des 1/0 Bitzählers (16) dargestellt sind nach dem Empfang eines Taktimpulses addiert, wobei die Vorrichtung eine hintereinandergeschaltete Blockbausteinarchitektur ("pipeline" architecture) mit mindestens zwei Blockstufen aufweist.

3. Vorrichtung nach Anspruch 2, **dadurch gekennzeichnet,** daß die Vorrichtung mit einem I/O port mit Kontrolleingang, r Ein/Ausgabeschnittstellen, q Eingänge und n Ausgänge umfaßt, wobei je einer der q Eingänge mit je einem Ausgang des Akkumulators (22) verbunden ist und je einer der n Ausgänge mit einem der Eingänge des Eingangslatchs (14) verbunden ist, wobei der I/O port die Signale abhängig vom Signal am Kontrolleingang entweder von den r Ein/Ausgabeschnittstellen zu seinen n Ausgängen oder von den q Eingängen zu den r Ein/Ausgabgeschnittstelle durchläßt, wobei r gleich dem größeren von q und n ist.

4. Vorrichtung nach Anspruch 3, **dadurch gekennzeichnet,** daß der 1/0 Bitzähler aus Volladdierer, die in Gruppen zusammengefaßt sind, besteht, wobei jeder Addierer drei Addiereingänge und zwei Addierausgänge hat; der Addiereingang wenigstens einiger der Addierer bilden n Eingänge und die Addierausgänge wenigstens einiger der Addierer bilden n Ausgänge.

5. Vorrichtung nach Anspruch 4, **dadurch gekennzeichnet,** daß der 1/0 Bitzähler (16) aus einer Vielzahl von Blockbausteinen unterschiedlicher Größe besteht, wobei der kleinste Blockbaustein einen einzelnen Volladdierer enthält und jeder größere Blockbaustein (1.) zwei größenmäßig kleinere Blockbausteine umfaßt und der (2.) die Ausgänge der zwei größenmäßig kleineren Blockbausteine zusammenfaßt.

6. Vorrichtung nach Anspruch 3, **dadurch gekennzeichnet,** daß in den 1/0 Bitzähler (16) ein Speicher der als Nachschlagetabelle programmiert ist, vorgesehen ist.

7. Vorrichtung nach Anspruch 3, **dadurch gekennzeichnet,** daß der 1/0 Bitzähler (16) (1.) aus einer Zusatzschaltung mit einem Digital/Analogwandler besteht, die ein Analogsignal proportional zu der Anzahl der 1/0 Bits in einem n-Bit-Wort erzeugt und (2.) einen A/D-Wandler umfaßt, der das Analogsignal in einen n Bitzahlenwert wandelt.

FIG. 1   STAND DER TECHNIK

FIG. 2

FIG. 3

EINGABEPUFFER ~44

CS' CS'B
S' S'B
R/W' R/W'B
OE' OE'B
INH' INH'B

46
I1 CL' C'
I2 KONTROLLOGIK Z'
I3 W'
I4 I5 R'

32
R'
IO15 I15
I/O
PORT
30
IO0 IO
OO O15
32

W' Z'
D15 Q15
EINGANGS-
REGISTER
34
D0 OO

B15
"1"
BITZÄHLER
36
B0

C4
CO

CL' Q4
ERGEBNIS-
REGISTER
38
D4
D0 QO
C'

CL' Q15
HALTE-
REGISTER
40
C'
OO
D0 D15

42
A4 SO
A0
ADDIERER
B15
B0 S15

0 195 284

FIG. 4

HALBADDIERER

VOLL-ADDIERER

"1" BITZÄHLER.

0 195 284

VOLLADDIERER

FIG. 5

HALBADDIERER

FIG. 6

KONTROLLOGIK

FIG. 7

I1
I2
I3
I4
I5

W'
C'
Z'
R'
CL'

VDD

FIG. 8

VDD

IOX

R'

OX

EIN/AUSGABEZELLE

IX

FIG. 9

W

DX

QX

R

W'

EINGABEREGISTERZELLE

FIG. 11

EINGABEREGISTER

FIG.10

68000 ZEITDIAGRAMM

FIG. 12

8086 ZEITDIAGRAMM

FIG. 13

FIG. 14 A

FIG. 14 B